# EUROPÄISCHE PATENTSCHRIFT

(11) **EP 4 108 059 B1**
(45) Veröffentlichungstag und Bekanntmachung des Hinweises auf die Patenterteilung: **16.10.2024**
(21) Anmeldenummer: 22180470.1
(22) Anmeldetag: 22.06.2022
(51) Int. Cl.: A01D 34/30, A01D 41/14

(54) **SCHNEIDWERK MIT GETEILTEM MESSERBALKEN**
CUTTING DEVICE WITH DIVIDED CUTTER BAR
MÉCANISME DE COUPE POURVU DE BARRE DE COUPE EN PLUSIEURS PARTIES

(30) Priorität: 25.06.2021 DE 102021116545
(43) Veröffentlichungstag der Anmeldung: 28.12.2022
(73) Patentinhaber: Carl Geringhoff GmbH & Co. KG, 59227 Ahlen (DE)
(72) Erfinder: Webermann, Dirk, 48308 Senden (DE)
(74) Vertreter: Weeg, Thomas

(56) Entgegenhaltungen:
- EP-A1- 0 634 088
- AU-B2- 549 006
- DE-B3- 102005 043 464
- DE-T2- 69 911 570
- FR-A1- 2 485 872

## Beschreibung

Die vorliegende Erfindung bezieht sich auf ein Schneidwerk nach dem Oberbegriff des Anspruchs 1.

Ein gattungsgemäßes Schneidwerk ist aus der Schrift DE 43 23 393 A1 bekannt. Es ist vorteilhaft, die Bewegung eines Teilabschnitts des Messerbalkens auf einen anderen Teilabschnitt des Messerbalkens zu übertragen, weil es einfacher und kostengünstiger zu realisieren ist, die Antriebskraft zur Bewegung des Messerbalken von einem Teilabschnitt auf den anderen zu übertragen, als für diesen einen eigenen Antriebsstrang von einer Antriebsquelle bis zu diesem Teilabschnitt des Messerbalkens herzustellen. Trotz mehrerer Teilabschnitte eines Messerbalkens muss nur ein einziger Antriebsstrang des Messerbalkens zum Antrieb aller Teilabschnitte bereitgestellt werden. Beim Zusammenführen der Segmente des Schneidwerks aus der Transportstellung in die Gebrauchsstellung können die Kraftübertragungselemente miteinander gekuppelt werden. Die in der vorbekannten Schrift offenbarten Kipphebel verfügen als Stoßelemente über Rollen als Abwälzflächen, die aufeinander reiben, wenn die Kipphebel hin und her schwenken. Da sich die Abwälzflächen nahe am Messerbalken und dem Feldboden befinden, kann sehr leicht Sand zwischen die Abwälzflächen geraten, durch den dann die Abwälzflächen einem hohen Verschleiß ausgesetzt sind. Es können sich auch Erntegut und Steine zwischen den Abwälzflächen festsetzen, was die Kippbewegungen behindern und letztendlich sogar blockieren kann.

Es ist die Aufgabe der vorliegenden Erfindung, den Verschleiß der Kraftübertragungsmittel zu verringern und diese funktionssicherer zu gestalten.

Die erfindungsgemäße Aufgabe wird für ein gattungsgemäßes Schneidwerk durch die kennzeichnenden Merkmale des Anspruchs 1 gelöst.

Die Stoßelemente rollen nicht mehr aufeinander ab, sondern bleiben über die formschlüssige Verbindung bei einer Bewegung des Messerbalkens in einer gleichbleibenden räumlichen Ausrichtung zueinander. Über die drehbewegliche Befestigung der Stoßelemente an den Kipphebeln können sich die beiden Stoßelemente während einer Schwenkbewegung der zugehörigen Kipphebel laufend an die räumliche Lage des gegenüberliegenden Stoßelements anpassen und aufeinander ausrichten, so dass sich die Stoßelemente während einer Kraftübertragung über die Stoßelemente nicht oder zumindest kaum mehr relativ zueinander bewegen, sondern in einer festen Ausrichtung zueinander bleiben.

Wenn sich der Messerbalken mit seinen Teilabschnitten während des Betriebs des Schneidwerks hin und her bewegt, führt der jeweils antreibende Teilabschnitt des Messerbalkens jeweils eine vorwärts und eine rückwärts gerichtete Hubbewegung aus. Diese angetriebenen Hubbewegungen werden von einem Messerbalkenantrieb erzeugt, der den antreibenden Teilabschnitt während des Gebrauchs des Schneidwerks bewegt. Der angetriebene Teilabschnitt des Messerbalkens folgt den Bewegungen des antreibenden Teilabschnitts über das Kraftübertragungsmittel. Um den angetriebenen Teilabschnitt in eine Richtung zu bewegen, überträgt ein Stoßelement eines Kipphebels die Schwenkbewegung dieses Kipphebels auf das benachbarte Stoßelement an dem Kipphebel des benachbarten Segments, so dass sich der benachbarte Kipphebel dadurch gleichsinnig bewegt. Die gleichsinnige Bewegung des angestoßenen Kipphebels wird auf den an diesem Segment befestigten Teilabschnitt des Messerbalkens übertragen, wodurch dieser ebenfalls gleichsinnig zum antreibenden Teilabschnitt des Messerbalkens bewegt wird. Auf den Kontaktflächen, über die sich die Stoßelemente berühren, entfallen die schleifenden Relativbewegungen durch die formschlüssige Verbindung der Stoßelemente. Durch die drehbewegliche Befestigung der Stoßelemente an den Kipphebeln und die formschlüssige Verbindung miteinander wird der Materialverschleiß auf den Kontaktflächen der Stoßelemente erheblich vermindert.

Die formschlüssige Verbindung der Stoßelemente miteinander erfolgt über geeignet gestaltete Ausformungen an den Stoßelementen. So können Ausformungen nach Art einer Nut-/Federverbindung oder in Gestalt von Einsenkungen oder Aufnahmekäfigen als Negativform vorsehen sein, in die ein dazu passend geformtes Bauteil mit einer Positivform eingesteckt wird. Die formschlüssige Verbindung der Stoßelemente kann bevorzugt beim Verlagern der Segmente aus der Transport- in die Gebrauchsstellung hergestellt werden. Dafür ist es vorteilhaft, wenn die Ausformungen so ausgestaltet sind, dass sich die Ausformungen im Verlauf der Verschwenkbewegung der Segmente aneinander anlegen, ohne dass es dafür zusätzlicher manuell oder motorisch betätigter Verstell- oder Verriegelungsvorgänge bedarf. Dazu sind die Ausformungen so gestaltet, dass sie eine Verschwenkbewegung der Segmente nicht behindern. Auch das Verlagern der Segmente aus der Gebrauchs- in die Transportstellung ist dann auf gleiche einfache Weise möglich.

Die formschlüssige Verbindung kann so ausgestaltet sein, dass sie gleichwohl Winkellagen der einzelnen Segmente des Schneidwerksrahmens relativ zueinander zulässt. Insbesondere bei größeren Arbeitsbreiten von Schneidwerken kann es bei unebenen Bodenverhältnissen erforderlich sein, dass sich die Segmente des Schneidwerksrahmens in ihrer räumlichen Lage in Querrichtung zur Arbeitsrichtung des Schneidwerks an die Bodenkontur anpassen. Um solche Bodenkonturanpassungen der Segmente nicht zu blockieren, sind die Ausformungen so ausgestaltet, dass sie verschiedene Winkellagen der Segmente zueinander in einer Richtung quer zur Arbeitsrichtung des Schneidwerks zulassen.

Bei dieser Ausgestaltung der Kraftübertragungsmittel ist es nicht erforderlich, die Teilabschnitte des Messerbalkens vor dem Verschwenken der Segmente aus der Transport- in die Gebrauchsstellung in eine definierte Stellung zu bringen, um die Teilabschnitte miteinander verkuppeln zu können. Es bleibt vielmehr dabei, dass die Teilabschnitte des Messerbalkens in einer beliebigen Stellung zueinander stehen können, wenn die Stoßelemente aufeinander zubewegt werden. Das Paar von Kipphebeln verschwenkt bei einer Verschwenkung der Segmente in die Gebrauchsstellung selbsttätig in eine Winkelstellung, in der die Kipphebel in der Endstellung parallel zueinander liegen und sich der angetriebene Kipphebel an die Winkellage des antreibenden Kipphebels angepasst hat. Dabei bewegt der angetriebene Kipphebel zwingend auch den mit ihm verbundenen Teilabschnitt des Messerbalkens in eine zum antreibenden Teilabschnitt des Messerbalkens passende Lage.

Der Montageaufwand der Kraftübertragungsmittel bei der Herstellung eines Schneidwerks ist gering. Es werden nur wenige Bauteile benötigt, es sind keine gesonderten Antriebe erforderlich, und auch an den Teilabschnitten des Messerbalkens werden keine besonderen Klingen und Mähfinger benötigt. Die Bauhöhe des Kraftübertragungsmittels ist gering, da die Kipphebel als flache Stanz- oder Gussteile ausgeführt sein können. Im Bereich der Trennfuge zwischen den Segmenten kann der Schneidwerksboden flach gehalten werden, so dass es dort keine Stufe gibt, die die Abförderung des vom Messerbalken geschnittenen Ernteguts in den rückwärtigen Teil des Schneidwerks behindern könnte.

Die vorgeschlagene Ausgestaltung des Kraftübertragungsmittels kann bei klappbaren Schneidwerken mit zwei, drei oder mehr Segmenten verwendet werden. Dabei spielt es keine Rolle, ob die Abförderung des vom Messerbalken geschnittenen Ernteguts über konventionelle Schneckenförderer erfolgt, die das Erntegut über einen starren Schneidwerksboden abfördern, oder ob es sich um ein Bandschneidwerk handelt, bei dem das Erntegut zusätzlich oder alternativ zu einem Schneckenförderer über ein oder mehrere endlos umlaufende Bänder im Bereich des Schneidwerksbodens abgefördert werden.

Nach einer Ausgestaltung der Erfindung weist eines der Stoßelemente als Ausformung einen konisch geformten Zentrierbolzen und das andere der Stoßelemente eine konisch zulaufende Aufnahmeöffnung auf. Beim Verschwenken der Segmente aus der Transport- in die Gebrauchsstellung kann der Zentrierstift entlang seiner axialen Erstreckung in die Aufnahmeöffnung hinein bewegt werden. Der Zentrierbolzen richtet dabei im Verlauf der Zusammenfahrbewegung der Segmente aus der Transport- in die Gebrauchsstellung des Schneidwerks über seine konisch geformten Flächen als Steuerflächen die Stoßelemente eines Paares von Kipphebeln passend zueinander aus. Dabei wirken die Steuerflächen des Zentrierbolzens mit den ebenfalls konisch geformten Steuerflächen der konisch zulaufenden Aufnahmeöffnung bei einer Kontaktierung zusammen. Im Verlauf einer Zusammenfahrbewegung der Segmente werden die Stoßelemente über die Steuerflächen in eine räumliche Lage bewegt, in der sie passgenau aufeinander ausgerichtet sind, um Bewegungen des Messerbalkens von einem antreibenden Teilabschnitt auf einen angetriebenen Teilabschnitt in Antriebsrichtung spielfrei oder zumindest annähernd spielfrei zu übertragen. Die Konizitäten des Zentrierbolzens und der Aufnahmeöffnung können dabei so ausgestaltet sein, dass sie einige Winkellagengrade in einer Richtung quer zur Arbeitsrichtung des Schneidwerks zwischen benachbarten Segmenten des Schneidwerksrahmens zulassen. Über den Zentrierbolzen werden die Stoßelemente eines Paares von Kipphebeln in der Gebrauchsstellung des Schneidwerks in ihrer für eine einwandfreie Funktion erforderlichen Relativstellung gehalten. Das gilt insbesondere auch, wenn sich der Messerbalken mit seinen Teilabschnitten hin und her bewegt und die Stoßelemente dabei laufend in ihrer relativen Lage zueinander ausgerichtet werden müssen. Der Zentrierbolzen macht es aber auch einfach, benachbarte Segmente wieder voneinander zu trennen, wenn diese aus der Gebrauchs- in die Transportstellung verschwenkt werden sollen, indem der Zentrierbolzen einfach entlang seiner axialen Erstreckung aus der Aufnahmeöffnung wieder herausbewegt wird. Der Zentrierbolzen kann auch eine Überlastsicherung bilden, der durch eine entsprechende Auslegung des Bolzens ober einer in den Bolzen eingebrachten Materialschwächung abschert, wenn die auf ihn einwirkenden Kräfte einen Grenzwert überschreiten. Im Überlastungsfall können auf diese Weise größere Schäden am Messerbalken und/oder dessen Antrieb vermieden werden.

Nach einer Ausgestaltung der Erfindung ist das Überstandsmaß des Zentrierbolzens über das zugehörige Stoßelement über ein Gewinde stufenlos verstellbar. Der Zentrierbolzen kann über das Gewinde seinem Verschleißzustand entsprechend so nachjustiert werden, dass die Kraftübertragung auch bei einem fortschreitenden Verschleiß der Steuerflächen spielfrei oder nahezu spielfrei erfolgt. Ist der Zentrierbolzen irgendwann verschlissen, kann er einfach austauscht werden.

Nach einer Ausgestaltung der Erfindung sind die Kipphebel an ihren ersten Enden jeweils über eine Drehachse drehbeweglich mit den Teilabschnitten des Messerbalkens verbunden, die dem Segment zugeordnet sind, an dem der jeweilige Kipphebel gelagert ist, und die Teilabschnitte des Messerbalkens weisen an den einander zugewandten Seiten Anschlussstücke mit Ausformungen auf, durch die die Teilabschnitte in der Gebrauchsstellung des Schneidwerks formschlüssig miteinander verbunden sind. Bei dieser Ausgestaltung der Erfindung sind die Kipphebel an ihren in Arbeitsrichtung des Schneidwerks weisenden Enden nur mit den Teilabschnitten des Messerbalkens verbunden, und die Teilabschnitte des Messerbalkens sind selbst direkt über die Anschlussstücke miteinander verbunden. Daraus ergibt sich ein optimaler Kraftfluss für die Übertragung einer Antriebsbewegung vom antreibenden Teilabschnitt auf den angetriebenen Teilabschnitt des Messerbalkens in die Antriebsrichtung. Die Antriebskraft wird über die Anschlussstücke direkt von einem auf den anderen Teilabschnitt übertragen und nicht mehr über die Kipphebel umgeleitet.

Nach einer Ausgestaltung der Erfindung weist eines der Anschlussstücke als Ausformung einen konisch geformten Zentrierbolzen und das andere Anschlussstück eine konisch zulaufende Aufnahmeöffnung auf. Für diese Ausgestaltung ergeben sich die zuvor schon für die entsprechende Ausgestaltung der Stoßelemente beschriebenen Vorteile.

Nach einer Ausgestaltung der Erfindung ist das Überstandsmaß des Zentrierbolzens über das zugehörige Anschlussstück über ein Gewinde stufenlos verstellbar. Auch hierfür ergeben sich die zuvor schon für die entsprechende Ausgestaltung der Stoßelemente beschriebenen Vorteile.

Nach einer Ausgestaltung der Erfindung verläuft die Trennfuge zwischen zwei benachbarten Segmenten zwischen benachbarten Messerfingern der Segmente. Bei dieser Ausgestaltung der Erfindung ist es nicht erforderlich, im Bereich der Trennfuge gesondert gestaltete Messerfinder vorzusehen.

Nach einer Ausgestaltung der Erfindung sind die Ausformungen der Stoßelemente und/oder die Ausformungen der Anschlussstücke nach Art einer Nut-/Federverbindung oder in Gestalt von Einsenkungen oder Aufnahmekäfigen als Negativform, in die ein dazu passend geformtes Bauteil mit einer Positivform einsteckbar ist, geformt sind, so dass diese eine Verschwenklage benachbarter Segmente im Verhältnis zu ihrer neutralen Ausgangsstellung zulassen. Diese Ausgestaltung ermöglicht es bei mehrteiligen Schneidwerken, die einzelnen Segmente des Schneidwerksrahmens um eine jeweilige in Arbeitsrichtung des Schneidwerks weisende Schwenkachse zu verschwenken, so dass sich in eine Richtung quer zur Arbeitsrichtung des Schneidwerks eine Winkellage der Segmente zueinander einstellt, mit der sich die Segmente einer unebenen Bodenkontur des Feldes anpassen.

Nach einer Ausgestaltung der Erfindung sind eines oder mehrere Stoßelemente mit Ausrichtelementen verbunden. Wenn sich die Kipphebel theoretisch frei im Raum bewegen können, kann es bei zu großen Freiheitsgraden in der Beweglichkeit Schwierigkeiten geben, die Stoßelemente immer sicher und störungsfrei zu kuppeln. Um das Kupplungsverhalten in solchen Fällen zu verbessern, sind die Stoßelemente in Führungsnuten oder -kulissen als Ausrichtelementen geführt, mit denen die Freiheitsgrade der Beweglichkeit eingeschränkt werden, oder es werden als Ausrichtelemente feste oder bewegliche Zapfen, Koppelstangen oder Drähte verwendet, die mit den Stoßelementen verbunden sind und diese in einer Einbaulage halten, in der diese auch bei getrennter Kupplung in einer zumindest annähernden Ausrichtung zueinander gehalten sind.

Nach einer Ausgestaltung der Erfindung stellen die Kipphebel mit den Stoßelementen und den damit verbundenen Zentrierbolzen Kontermassen zur Reduzierung von Schwingungen im Schneidsystem dar. Diese Bauteile bewegen sich zumindest mit einzelnen Abschnitten antizyklisch zur übrigen Masse des Schneidsystems. Durch ein erhöhtes Gewicht dieser Bauteile in den entsprechenden Abschnitten oder besonderen, schweren Anbauteilen wie beispielsweise Bleigewichten oder dergleichen ist es möglich, die Kraftspitzen aus den Schwingungen zu reduzieren und die aus den Bewegungen des Schneidsystem resultierenden Schwingungen zumindest teilweise auszugleichen.

Weitere Merkmale der Erfindung ergeben sich aus den Ansprüchen, den Figuren und der nachfolgenden Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, soweit dem keine technisch zwingenden Gründe entgegenstehen.

Die Erfindung wird nun anhand eines bevorzugten Ausführungsbeispiels sowie unter Bezugnahme auf die beigefügten Zeichnungen näher erläutert. Es zeigen:
- Fig. 1:: ein Schneidwerk 2 zum Anbau an eine landwirtschaftliche Erntemaschine,
- Fig. 2:: das in Fig. 1 gezeigte Schneidwerk mit eingeklappten Segmenten,
- Fig. 3:: eine vergrößerte Ansicht der Messerkupplung in einer leicht geöffneten Stellung,
- Fig. 4:: eine Ansicht auf die Messerkupplung von oben in einer geschlossen Stellung mit den Kipphebeln in Mittellage,
- Fig. 5:: die in Fig. 4 gezeigte Messerkupplung mit Kipphebeln, die in eine erste Richtung bis zum Anschlag verschwenkt sind, und
- Fig. 6:: die in Fig. 4 gezeigte Messerkupplung mit Kipphebeln, die in eine zweite Richtung bis zum Anschlag verschwenkt sind.

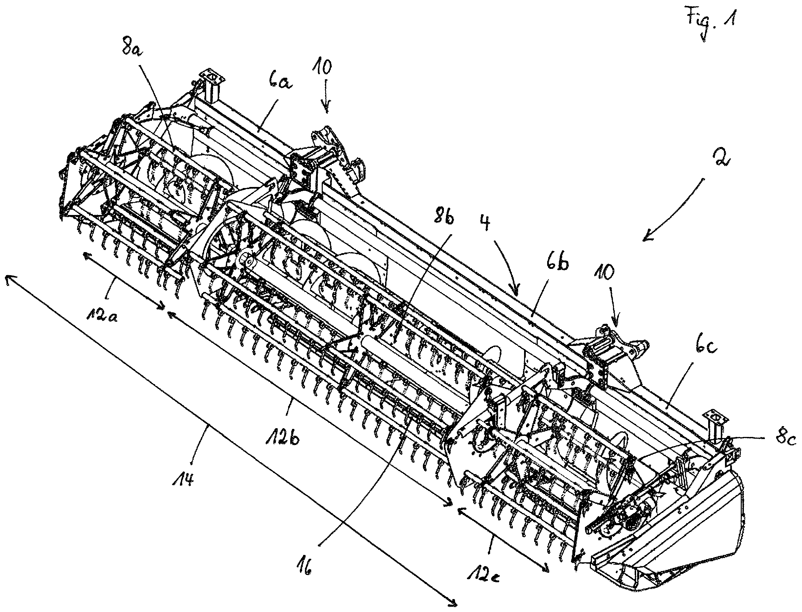

In Figur 1 ist ein Schneidwerk 2 zum Anbau an eine landwirtschaftliche Erntemaschine gezeigt. Der Anbaurahmen 4 befindet sich auf der Rückseite des Schneidwerks 2. Der Schneidwerksrahmen 6 des Schneidwerks 2 ist in mehrere Segmente 8 unterteilt. In Figur 1 ist das Schneidwerk 2 mit ausgeklappten Segmenten 8 gezeigt, sodass sich das Schneidwerk 2 mit den in horizontaler Richtung quer nebeneinander positionierten Segmente 8a, 8b, 8c in einem betriebsfertigen Zustand für die Erntearbeit befindet. Im gezeigten Ausführungsbeispiel ist der Schneidwerksrahmen 6 dreiteilig ausgebildet, wobei die Teile 6a und 6c auf die äußeren Segmente 8a, 8c entfallen und der Teil 6b des Schneidwerksrahmens 6 das mittlere Segment 8b des Schneidwerks 2 trägt.

Die äußeren Segmente 8a, 8c des Schneidwerks 2 sind mittels einer Verstellvorrichtung 10 aus einer Gebrauchsstellung, die in Figur 1 gezeigt ist, in eine die Schneidwerks- und Gesamtarbeitsbreite 14 verringernde Transportstellung verlagerbar. Die äußeren Segmente 8a, 8c und das mittlere Segment 8b verfügen jeweils über die entsprechende Teilarbeitsbreite 12a, 12b und 12c, aus denen sich in der Gebrauchsstellung die Gesamtarbeitsbreite ergibt.

An der Vorderkante des Schneidwerks befindet sich der Messerbalken 16, der in mehrere den einzelnen Segmenten 8a, 8b, 8c zugeordnete Teilabschnitte unterteilt ist.

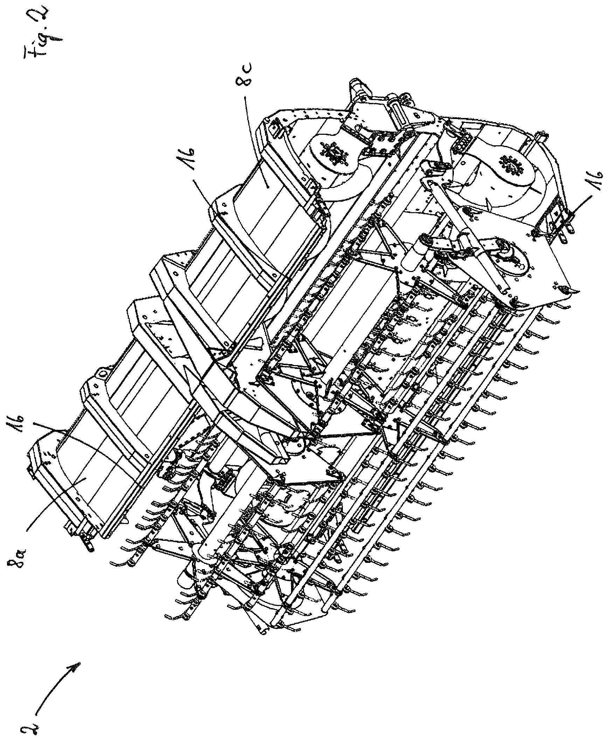

In Fig. 2 ist das in Fig. 1 gezeigte Schneidwerk 2 mit eingeklappten Segmenten 8a, 8c gezeigt. In dieser Stellung der Segmente 8a, 8c ist die Gesamtbreite des Schneidwerks 2 verringert. Bei der Einklapp- und Ausklappbewegung der Segmente 8a, 8c werden die zu den Segmenten 8a, 8c gehörenden Teile des Messerbalkens 16 mit verschwenkt. Um die Teile des Messerbalkens 16 in der Gebrauchsstellung miteinander zu verbinden, sind an den Trennstellen zwischen den jeweiligen Teilen des Messerbalkens 16 Messerkupplungen ausgebildet, mit denen die Teile des Messerbalkens 16 miteinander in der Gebrauchsstellung antriebsverbunden sind.

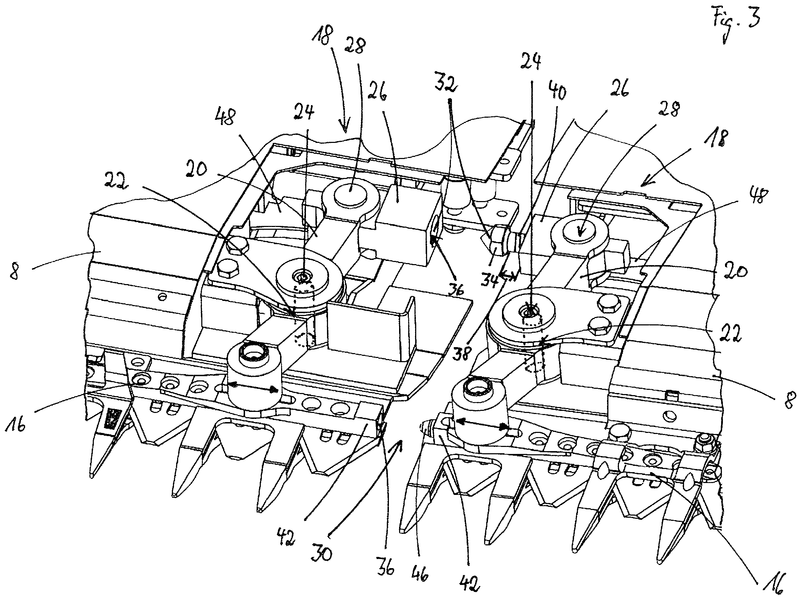

In Fig. 3 ist eine vergrößerte Ansicht einer Messerkupplung in einer leicht geöffneten Stellung gezeigt. Das Bodenblech des Schneidwerks 2 ist im gezeigten Ausführungsbeispiel im Bereich der Messerkupplung geöffnet dargestellt, um die Funktion der einzelnen Bauteile erläutern zu können. Das Bodenblech ist bei den realen Schneidwerken 2 geschlossen, um die Messerkupplung vor eindringendem Schmutz zu schützen.

Das in Fig. 3 gezeigte Kraftübertragungsmittel weist zwei Kipphebel 20 auf, die auf gegenüberliegenden Seiten der Trennfuge 30 auf jeweils einem Segment 8 des Schneidwerks 2 montiert sind. Die Kipphebel 20 sind auf in Fig. 3 gestrichelt dargestellten Lagerbolzen 22 montiert, die fest mit dem jeweiligen Segment 8 verbunden sind und die sich in Fig. 3 in einer zeichnerisch nicht dargestellten Aufnahmebohrung in den Kipphebeln 20 befinden. Die Lage der Lagerbolzen 22 bestimmt die Lage der Drehpunkte 24, um die die Kipphebel 20 in Richtung der Doppelpfeile drehbeweglich sind. Die Drehpunkte 24 befinden sich zwischen den gegenüberliegenden Enden der Kipphebel 20. Die Stoßelemente 26 sind durch Ausrichtelemente 46 in einer Ausrichtung gehalten, bei der die Stoßelemente 26 auf gegenüberliegenden Seiten der Messerkupplung in einer zumindest annähernden Ausrichtung zueinander gehalten sind, so dass die Ausrichtelemente 46 die Freiheitsgrade einschränken, innerhalb derer die Stoßelemente 26 beweglich sind. Die Kipphebel 20 stellen mit den Stoßelementen 26 und den damit verbundenen Zentrierbolzen 3 zumindest in bestimmten Abschnitten Kontermassen zur Reduzierung von Schwingungen im Schneidsystem dar.

An den in Fig. 3 vorderen Enden sind die Kipphebel 20 mit dem Teil des Messerbalkens 16 verbunden, der zu dem Segment 8 gehört, auf dem der jeweilige Kipphebel 20 montiert ist. An den gegenüberliegenden Enden der Kipphebel 20 sind diese mit einem Stoßelement 26 verbunden, die sich räumlich passend genau gegenüberliegen. Bei einer Schwenkbewegung eines Kipphebels 20, bei sich das mit dem Stoßelement 26 versehene Ende des ersten Kipphebels 20 auf das entsprechende Ende des gegenüberliegenden zweiten Kipphebels 20 zubewegt, stößt das mit dem ersten Kipphebel 20 verbundene Stoßelement 26 auf das mit dem zweiten Kipphebel 20 verbundene Stoßelement 26 und schiebt dieses vor sich her, wodurch sich auch der zweite Kipphebel 20 mit dem zugehörigen Ende in die Bewegungsrichtung des ersten Kipphebels 20 bewegt. Auf diese Weise treibt der erste Kipphebel 20 den zweiten Kipphebel 20 an. Die Drehbewegung des zweiten Kipphebels 20 wird auf den damit verbundenen Teil des Messerbalkens 16 übertragen, so dass durch die Kippbewegung des zweiten Kipphebels 20 dieser Teil des Messerbalkens 16 angetrieben wird. Um bei den Relativbewegungen der Stoßelemente 26 zueinander die mechanische Reibung auf den Oberflächen zu verringern, sind die Stoßelemente 26 jeweils über eine Drehachse 28 mit dem jeweiligen Kipphebel 20 verbunden.

Die Stoßelemente 26 weisen an den einander zugewandten Seiten Ausformungen 32 auf, durch die die Stoßelemente 26 in der Gebrauchsstellung des Schneidwerks 2 formschlüssig miteinander verbunden sind. In dem in Fig. 3 gezeigten Ausführungsbeispiel befindet sich an einem Stoßelement 26 ein Zentrierbolzen 34 und an dem anderen Stoßelement 26 eine Aufnahmeöffnung 36, in die der Zentrierbolzen 34 eintauchen und mit seinen Kontaktflächen an den Innenoberflächen der Aufnahmeöffnung 36 anliegen kann. Durch Anlage der Kontaktflächen aneinander ergibt sich die formschlüssige Verbindung der Stoßelemente 26 miteinander. Der Zentrierbolzen 34 verfügt an seinem Schaft über ein Gewinde 40, mit dem der Zentrierbolzen 34 auf ein bestimmtes Überstandsmaß 38 zum Stoßelement 26 und damit auf einen genauen Abstand zur Aufnahmeöffnung 36 eingestellt werden kann.

Im Ausführungsbeispiel weisen auch die einander zugewandten Enden der Teile des Messerbalkens 16 Ausformungen 44 auf, mit denen eine Schubbewegung eines Teils des Messerbalkens 16 auf das andere Teil des Messerbalkens 16 übertragen werden kann. In Fig. 3 sind dafür Anschlussstücke 42 an den Enden der Teile des Messerbalkens 16 vorhanden. Im gezeigten Ausführungsbeispiel weisen die Anschlussstücke 42 wieder eine Aufnahmeöffnung 36 und einen Verbindungszapfen 46 auf, die ebenfalls in der in Fig. 1 gezeigten Betriebsstellung des Schneidwerks 2 formschlüssig ineinander greifen. Die Formen der Aufnahmeöffnung 36 und des Verbindungszapfens 46 sind wieder bevorzugt konisch zulaufend und als Positiv-/Negativform zueinander passend ausgestaltet. Während die Stoßelemente 26 im Ausführungsbeispiel eine Antriebskraft nur in eine erste Richtung übertragen, weil sie nicht in Bewegungsrichtung dauerhaft miteinander verbunden sind, sondern nur von der in die erste Richtung wirkenden Antriebskraft aufeinander gehalten werden, können die den Messerbalken 16 in die der ersten Richtung entgegen gerichtete zweite Richtung bewegenden Rückstellkräfte den dabei getriebenen Teil des Messerbalkens 16 über die Ausformungen 44 übertragen und in die zweite Richtung bewegen. Auf diese Weise ist es möglich, den Messerbalken 16 über die beschriebene Messerkupplung in oszillierenden Bewegungen anzutreiben.

Die beschriebene Messerkupplung stellt beim Aufklappen der äußeren Segmente 8 selbsttätig eine kraftschlüssige Verbindung zwischen den Teilen des Messerbalkens 16 her, indem die Stoßelemente 26 und die Anschlussstücke 42 dabei aufeinander zu bewegt werden und sich die Kipphebel 20 dabei in eine passende Schwenkstellung ausrichten, ohne dass es dabei noch einer manuellen oder motorischen zusätzlichen Verriegelung oder eines sonstigen Arbeitsganges bedarf. Genauso lässt sich die Messerkupplung beim Einklappen der Segmente 8 wieder trennen, indem die Stoßelemente 26 und die Anschlussstücke 42 dabei voneinander weg bewegt werden, ohne dass es dafür noch zusätzlicher Bedienschritte bedarf.

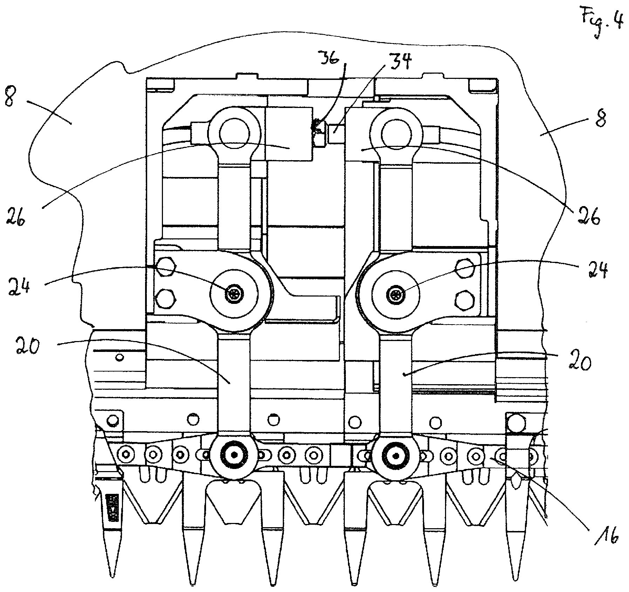

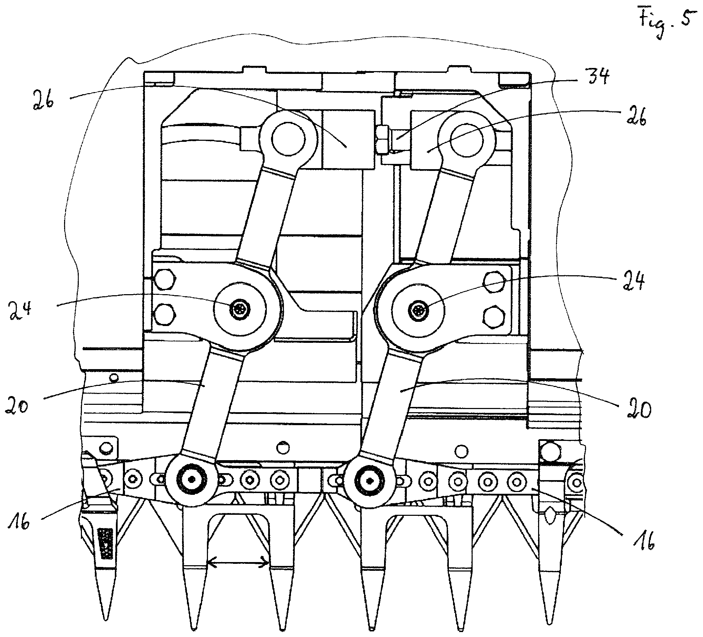

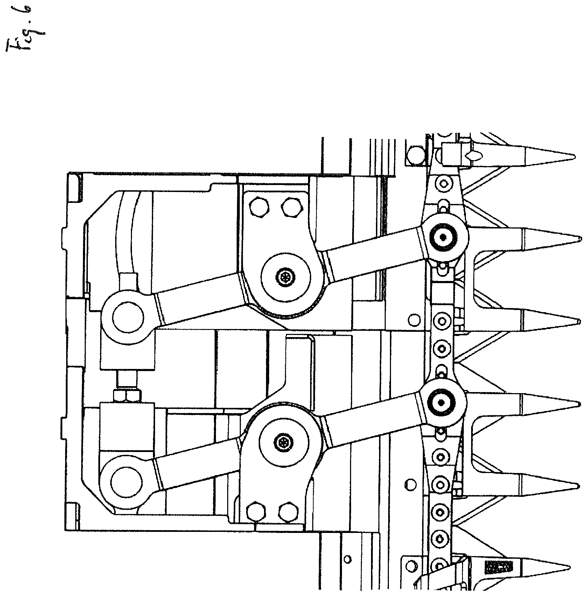

In Fig. 4 ist eine Ansicht auf die Messerkupplung in einer geschlossen Stellung von oben gezeigt, wobei sich die Kipphebel 20 in ihrer Mittellage befinden. Im Vergleich mit der Darstellung in Fig. 3 ist erkennbar, dass die konische Spitze des Zentrierbolzens 34 in der geschlossenen Stellung der Messerkupplung in die Aufnahmeöffnung 36 eingetaucht ist. Das bleibt auch so, wenn beide Kipphebel 20 voll bis zum Anschlag in die erste Richtung verschwenkt sind, wie es in Fig. 5 gezeigt ist, oder in die zweite Richtung, wie es in Fig. 6 gezeigt ist. Da die Stoßelemente 26 sich unabhängig von der Schwenkstellung der Kipphebel 20 kaum oder gar nicht relativ zueinander bewegen, ist auch der Verschleiß an den Kontaktflächen auf ein unvermeidliches Maß reduziert. Bei der Verschwenkung von der ersten in die zweite Richtung legen die Kipphebel 20 an ihrem ersten Ende einen Verstellweg zurück, dessen Länge dem Abstand zwischen den Messerfingern entspricht, wie durch den Doppelpfeil in Fig. 5 angedeutet. Der Messerbalken 16 wird dadurch so weit in eine Richtung bewegt, dass eine Messerklinge von einem Messerfinger zum nächsten bewegt wird.

### Bezugszeichenliste

2 Schneidwerk
4 Anbaurahmen
6 Schneidwerksrahmen
8 Segment
10 Verstellvorrichtung
12 Teilarbeitsbreite
14 Gesamtarbeitsbreite
16 Messerbalken
18 Kraftübertragungsmittel
20 Kipphebel
22 Lagerbolzen
24 Drehpunkt
26 Stoßelement
28 Drehachse
30 Trennfuge
32 Ausformung
34 Zentrierbolzen
36 Aufnahmeöffnung
38 Überstandsmaß
40 Gewinde
42 Anschlussstück
44 Ausformung
46 Verbindungszapfen
48 Ausrichtelement

## Patentansprüche

1. Schneidwerk (2) mit einem Anbaurahmen (4) zum Anbau an eine landwirtschaftliche Erntemaschine, der Anbaurahmen (4) ist mit einem aus mehreren Segmenten (8) gebildeten Schneidwerksrahmen (6) verbunden, wobei die Segmente (8) mittels einer Verstellvorrichtung (10) aus einer Gebrauchsstellung in eine die Schneidwerksbreite verringernde Transportstellung verlagerbar und in der Gebrauchsstellung des Schneidwerks (2) in einer horizontalen Richtung quer zur Arbeitsrichtung des Schneidwerks (2) nebeneinander positionierbar sind, die Segmente (8) definieren in der Gebrauchsstellung mit ihren jeweiligen Teilarbeitsbreiten (12) gemeinsam eine Gesamtarbeitsbreite (12) des Schneidwerks (2), in der Gebrauchsstellung des Schneidwerks (2) befindet sich an der in Arbeitsrichtung des Schneidwerks (2) weisenden Vorderkante ein sich über die Gesamtarbeitsbreite erstreckender, oszillierend angetriebener Messerbalken (16), der in mehrere den einzelnen Segmenten (8) zugeordnete Teilabschnitte unterteilt ist, benachbarte Teilabschnitte des Messerbalkens (16) sind in der Gebrauchsstellung des Schneidwerks (2) über Kraftüberragungsmittel (18) miteinander antriebsverbunden, die als ein Paar gegenüberliegend angeordneter zweiseitiger Kipphebel (20) ausgestaltet sind, die jeweils auf einem einem Segment (8) zugeordneten Lagerbolzen (22) gehalten sind, der jeweilige Drehpunkt (24) eines Kipphebels (20) ist zwischen gegenüberliegenden Enden der Kipphebel (20) angeordnet, jeder Kipphebel (20) ist an einem ersten Ende mit dem Teilabschnitt des Messerbalkens (16) verbunden, der dem Segment (8) zugeordnet ist, auf dem der Kipphebel (20) montiert ist, jeder Kipphebel (20) bewegt mit seinem zweiten Ende ein Stoßelement (26), mit dem eine Kippbewegung des Kipphebels (20) auf das Stoßelement (26) des benachbarten Kipphebels (20) übertragbar ist, die Stoßelemente (26) eines Paares von Kipphebeln (20) sind jeweils über eine Drehachse (28) drehbeweglich mit den zweiten Enden der Kipphebel (20) verbunden, und jeweils ein Kipphebel (20) eines Paares ist in der Gebrauchsstellung des Schneidwerks (2) auf einer Seite der Trennfuge (30) zwischen zwei benachbarten Segmenten (8) angeordnet, **dadurch gekennzeichnet, dass** die Stoßelemente (26) an den einander zugewandten Seiten Ausformungen (32, 44) aufweisen, durch die die Stoßelemente (26) in der Gebrauchsstellung des Schneidwerks (2) formschlüssig miteinander verbunden sind, und die Stoßelemente sich während einer Kraftübertragung über die Stoßelemente nicht relativ zueinander bewegen.

2. Schneidwerk (2) nach Anspruch 1, **dadurch gekennzeichnet, dass** eines der Stoßelemente (26) als Ausformung einen konisch geformten Zentrierbolzen (34) und das andere der Stoßelemente (26) eine konisch zulaufende Aufnahmeöffnung (36) aufweist.

3. Schneidwerk (2) nach Anspruch 2, **dadurch gekennzeichnet, dass** das Überstandsmaß (38) des Zentrierbolzens (34) über das zugehörige Stoßelement (26) über ein Gewinde (40) stufenlos verstellbar ist.

4. Schneidwerk (2) nach einem der vorhergehenden Ansprüche, **dadurch gekennzeichnet, dass** die Kipphebel (20) an ihren ersten Enden jeweils über eine Drehachse (28) drehbeweglich mit den Teilabschnitten des Messerbalkens (16) verbunden sind, die dem Segment (8) zugeordnet sind, an dem der jeweilige Kipphebel (20) gelagert ist, und die Teilabschnitte des Messerbalkens (16) an den einander zugewandten Seiten Anschlussstücke (42) mit Ausformungen (32, 44) aufweisen, durch die die Teilabschnitte in der Gebrauchsstellung des Schneidwerks (2) formschlüssig miteinander verbunden sind.

5. Schneidwerk (2) nach Anspruch 4, **dadurch gekennzeichnet, dass** eines der Anschlussstücke (42) als Ausformung einen konisch geformten Zentrierbolzen (34) und das andere Anschlussstück eine konisch zulaufende Aufnahmeöffnung (36) aufweist.

6. Schneidwerk (2) nach einem der vorhergehenden Ansprüche, **dadurch gekennzeichnet, dass** das Überstandsmaß (38) des Zentrierbolzens (34) über das zugehörige Anschlussstück (42) über ein Gewinde (40) stufenlos verstellbar ist.

7. Schneidwerk (2) nach einem der vorhergehenden Ansprüche, **dadurch gekennzeichnet, dass** die Trennfuge (30) zwischen zwei benachbarten Segmenten (8) zwischen benachbarten Messerfingern der Segmente (8) verläuft.

8. Schneidwerk (2) nach einem der vorhergehenden Ansprüche 4 bis 7, **dadurch gekennzeichnet, dass** die Ausformungen ((32, 44)) der Stoßelemente (26) und/oder die Ausformungen (32, 44) der Anschlussstücke (42) nach Art einer Nut-/Federverbindung oder in Gestalt von Einsenkungen oder Aufnahmekäfigen als Negativform, in die ein dazu passend geformtes Bauteil mit einer Positivform einsteckbar ist, geformt sind, so dass diese eine Verschwenklage benachbarter Segmente (8) im Verhältnis zu ihrer neutralen Ausgangsstellung zulassen.

9. Schneidwerk (2) nach einem der vorhergehenden Ansprüche, **dadurch gekennzeichnet, dass** eines oder mehrere Stoßelemente (26) mit Ausrichtelementen (48) verbunden sind.

10. Schneidwerk (2) nach einem der vorhergehenden Ansprüche, **dadurch gekennzeichnet, dass** die Kipphebel (20) mit den Stoßelementen (26) und den damit verbundenen Zentrierbolzen (3) Kontermassen zur Reduzierung von Schwingungen im Schneidsystem darstellen.

## Claims

1. Cutting device (2) having a fitting frame (4) for fitting to an agricultural harvesting machine, the fitting frame (4) is connected to a cutting device frame (6) which is formed from a plurality of segments (8), wherein the segments (8) can be displaced by means of an adjustment apparatus (10) from a position for use into a transport position which reduces the cutting device width and can be positioned beside each other in the position for use of the cutting device (2) in a horizontal direction transverse relative to the working direction of the cutting device (2), the segments (8) together define in the position for use with the respective partial working widths (12) thereof an overall working width (12) of the cutting device (2), in the position for use of the cutting device (2) there is at the front edge, which is directed in the working direction of the cutting device (2), a cutter bar (16) which extends over the overall working width and which is driven in an oscillating manner and which is subdivided into a plurality of sections which are associated with the individual segments (8), adjacent sections of the cutter bar (16) are drivingly connected to each other in the position for use of the cutting device (2) via force transmission means (18) which are in the form of a pair of two-sided tilting levers (20) which are arranged opposite each other and which are each retained on a bearing pin (22) which is associated with a segment (8), the respective center of rotation (24) of a tilting lever (20) is arranged between opposite ends of the tilting levers (20), each tilting lever (20) is connected at a first end to the section, which is associated with the segment (8) on which the tilting lever (20) is mounted, of the cutter bar (16), each tilting lever (20) moves with the second end thereof an impact element (26), with which a tilting movement of the tilting lever (20) can be transmitted to the impact element (26) of the adjacent tilting lever (20), the impact elements (26) of a pair of tilting levers (20) are each connected via a rotation axis (28) in a rotationally movable manner to the second ends of the tilting levers (20) and one tilting lever (20) of a pair is arranged in the position for use of the cutting device (2) at a side of the separation joint (30) between two adjacent segments (8), **characterized in that** the impact elements (26) have at the mutually facing sides formations (32, 44) by which the impact elements (26) in the position for use of the cutting device (2) are connected to each other in a positive-locking manner, and the impact elements do not move relative to each other during a force transmission via the impact elements.

2. Cutting device (2) according to Claim 1, **characterized in that** one of the impact elements (26) has as a formation a conically formed centring pin (34) and the other of the impact elements (26) has a conically tapering receiving opening (36).

3. Cutting device (2) according to Claim 2, **characterized in that** the overhang dimension (38) of the centring pin (34) over the associated impact element (26) can be adjusted in a stepless manner by means of a thread (40) .

4. Cutting device (2) according to any one of the preceding claims, **characterized in that** the tilting levers (20) are at the first ends thereof connected in each case via a rotation axis (28) in a rotationally movable manner to the sections of the cutter bar (16) which are associated with the segment (8) on which the respective tilting lever (20) is supported and the sections of the cutter bar (16) have at the mutually facing sides connection pieces (42) with formations (32, 44) by means of which the sections are connected to each other in a positive-locking manner in the position for use of the cutting device (2).

5. Cutting device (2) according to Claim 4, **characterized in that** one of the connection pieces (42) has as a formation a conically formed centring pin (34) and the other connection piece has a conically tapering receiving opening (36).

6. Cutting device (2) according to any one of the preceding claims, **characterized in that** the overhang dimension (38) of the centring pin (34) over the associated connection piece (42) can be adjusted in a stepless manner by means of a thread (40).

7. Cutting device (2) according to any one of the preceding claims, **characterized in that** the separation joint (30) extends between two adjacent segments (8) between adjacent blade fingers of the segments (8).

8. Cutting device (2) according to any one of the preceding Claims 4 to 7, **characterized in that** the formations (32, 44) of the impact elements (26) and/or the formations (32, 44) of the connection pieces (42) are in the form of a tongue and groove connection or in the form of recesses or receiving cages as a negative form in which a correspondingly formed component with a positive form can be inserted so that they permit a pivot position of adjacent segments (8) in relation to the neutral starting position thereof.

9. Cutting device (2) according to any one of the preceding claims, **characterized in that** one or more impact elements (26) are connected to orientation elements (48).

10. Cutting device (2) according to any one of the preceding claims, **characterized in that** the tilting levers (20) having the impact elements (26) and the centring pins (3) which are connected thereto constitute counter-masses in order to reduce oscillations in the cutting system.

## Revendications

1. Unité de coupe (2) avec un cadre de montage (4) pour le montage sur une machine de récolte agricole, le cadre de montage (4) étant relié à un cadre d'unité de coupe (6) formé de plusieurs segments (8), les segments (8) pouvant être déplacés au moyen d'un dispositif de réglage (10) d'une position d'utilisation dans une position de transport réduisant la largeur de l'unité de coupe et pouvant être positionnés dans la position d'utilisation de l'unité de coupe (2) les uns à côté des autres dans une direction horizontale transversale à la direction de travail de l'unité de coupe (2), les segments (8) définissant ensemble dans la position d'utilisation avec leurs largeurs de travail partielles respectives (12) une largeur de travail totale (12) de l'unité de coupe (2), une barre de lame (16) qui s'étend sur la largeur de travail totale, entraînée de manière oscillante, se trouvant, dans la position d'utilisation de l'unité de coupe (2), sur le bord avant orienté dans la direction de travail de l'unité de coupe (2), laquelle barre est divisée en plusieurs sections partielles associées aux segments individuels (8), des sections partielles voisines de la barre de lame (16) étant reliées en entraînement les unes aux autres dans la position d'utilisation de l'unité de coupe (2) par l'intermédiaire de moyens de transmission de force (18) qui sont conçus sous la forme d'une paire de leviers basculants (20) à deux côtés agencés en face l'un de l'autre, qui sont maintenus chacun sur un goujon de palier (22) associé à un segment (8), le point de rotation (24) respectif d'un levier basculant (20) étant agencé entre des extrémités opposées des leviers basculants (20), chaque levier basculant (20) étant relié à une première extrémité à la section partielle de la barre de lame (16), qui est associée au segment (8) sur lequel le levier basculant (20) est monté, chaque levier basculant (20) déplaçant avec sa deuxième extrémité un élément de poussée (26) avec lequel un mouvement de basculement du levier basculant (20) peut être transmis à l'élément de poussée (26) du levier basculant (20) voisin, les éléments de poussée (26) d'une paire de leviers basculants (20) étant chacun reliés aux deuxièmes extrémités des leviers basculants (20) par l'intermédiaire d'un axe de rotation (28) de manière mobile en rotation, et un levier basculant (20) de chaque paire étant agencé, dans la position d'utilisation de l'unité de coupe (2), sur un côté du joint de séparation (30) entre deux segments (8) voisins, **caractérisée en ce que** les éléments de poussée (26) présentent sur les côtés tournés l'un vers l'autre des formations (32, 44) par lesquelles les éléments de poussée (26) sont reliés entre eux par complémentarité de forme dans la position d'utilisation de l'unité de coupe (2), et les éléments de poussée ne se déplacent pas les uns par rapport aux autres pendant une transmission de force par l'intermédiaire des éléments de poussée.

2. Unité de coupe (2) selon la revendication 1, **caractérisée en ce que** l'un des éléments de poussée (26) présente en tant que formation un goujon de centrage (34) de forme conique et l'autre des éléments de poussée (26) une ouverture de réception (36) se terminant en cône.

3. Unité de coupe (2) selon la revendication 2, **caractérisée en ce que** la dimension de dépassement (38) du goujon de centrage (34) est réglable en continu par l'intermédiaire de l'élément de poussée (26) correspondant par l'intermédiaire d'un filetage (40).

4. Unité de coupe (2) selon l'une quelconque des revendications précédentes, **caractérisée en ce que** les leviers basculants (20) sont reliés de manière mobile en rotation, à leurs premières extrémités, par l'intermédiaire d'un axe de rotation (28), aux sections partielles de la barre de lame (16) qui sont associées au segment (8), sur lequel est monté le levier basculant (20) respectif, et les sections partielles de la barre de lame (16) présentent, sur les côtés tournés l'un vers l'autre, des pièces de raccordement (42) avec des formations (32, 44), par lesquelles les sections partielles sont reliées entre elles par complémentarité de forme dans la position d'utilisation de l'unité de coupe (2).

5. Unité de coupe (2) selon la revendication 4, **caractérisée en ce que** l'une des pièces de raccordement (42) présente en tant que formation un goujon de centrage (34) de forme conique et l'autre pièce de raccordement une ouverture de réception (36) se terminant en cône.

6. Unité de coupe (2) selon l'une quelconque des revendications précédentes, **caractérisée en ce que** la distance de dépassement (38) du goujon de centrage (34) par rapport à la pièce de raccordement (42) correspondante est réglable en continu par l'intermédiaire d'un filetage (40).

7. Unité de coupe (2) selon l'une quelconque des revendications précédentes, **caractérisée en ce que** le joint de séparation (30) entre deux segments (8) voisins s'étend entre des doigts de lame voisins des segments (8) .

8. Unité de coupe (2) selon l'une quelconque des revendications 4 à 7 précédentes, **caractérisée en ce que** les formations (32, 44) des éléments de poussée (26) et/ou les formations (32, 44) des pièces de raccordement (42) sont formées à la manière d'un assemblage à rainure/languette ou sous la forme de cavités ou de cages de réception en tant que forme négative, dans lesquelles peut être enfiché un composant de forme positive adapté, de telle sorte que celles-ci permettent une position pivotée de segments (8) voisins par rapport à leur position de départ neutre.

9. Unité de coupe (2) selon l'une quelconque des revendications précédentes, **caractérisée en ce qu'**un ou plusieurs éléments de poussée (26) sont reliés à des éléments d'alignement (48).

10. Unité de coupe (2) selon l'une quelconque des revendications précédentes, **caractérisée en ce que** les leviers basculants (20) avec les éléments de poussée (26) et les goujons de centrage (3) qui leur sont reliés constituent des contre-masses pour réduire les vibrations dans le système de coupe.
